Europäisches Patentamt

European Patent Office

Office européen des brevets

(19)

(11) Veröffentlichungsnummer : **0 064 610**
**B1**

(12) **EUROPÄISCHE PATENTSCHRIFT**

(45) Veröffentlichungstag der Patentschrift :
18.09.85

(21) Anmeldenummer : 82103189.5

(22) Anmeldetag : 15.04.82

(51) Int. Cl.⁴ : **B 23 K 3/02**

(54) **Elektrisch beheiztes Lötwerkzeug.**

(30) Priorität : 16.04.81 DE 3115569

(43) Veröffentlichungstag der Anmeldung :
17.11.82 Patentblatt 82/46

(45) Bekanntmachung des Hinweises auf die Patenterteilung : 18.09.85 Patentblatt 85/38

(84) Benannte Vertragsstaaten :
AT BE CH FR GB IT LI LU NL SE

(56) Entgegenhaltungen :
DE-A- 3 100 284
DE-C- 879 437
FR-A- 2 418 696
GB-A- 818 428
US-A- 2 935 593
US-A- 3 571 552
US-A- 3 636 298
US-A- 3 703 624
US-A- 4 158 121

(73) Patentinhaber : Cooper Industries Inc.
P.O. Box 4446
Houston Texas 77210 (US)

(72) Erfinder : Rittmann, Günther
Mozartweg 8
D-7121 Gemmerigheim (DE)
Erfinder : Peter Goerlich
Guttenbergstrasse 6
D-7122 Besigheim (DE)

(74) Vertreter : Feldkamp, Rainer, Dipl.-Ing. et al
Kaufingerstrasse 8
D-8000 München 2 (DE)

EP 0 064 610 B1

Jouve, 18, rue St-Denis, 75001 Paris, France

**Beschreibung**

Die Erfindung bezieht sich auf ein elektrisch beheiztes Lötwerkzeug mit einem über einen Übertrager gespeisten Heizelement zur Heizung einer Lötspitze und mit einem Temperaturfühler mit nachgeschalteter Auswerteschaltung zur Steuerung der dem Heizelement zugeführten Leistung.

Elektronisch geregelte Lötkolben, bei denen entweder eine feste vorgegebene Temperatur oder eine einstellbare Temperatur weitgehend konstant gehalten wird, sind in großem Umfang bekannt. Bei derartigen Lötwerkzeugen, die einerseits zum Löten und andererseits bei Kunststoffen oder dergleichen zum Schneiden und Verschweißen sowie für eine Vielzahl von anderen Zwecken Verwendung finden, ist es in vielen Fällen aus Sicherheitsgründen erwünscht, das Heizelement mit niedriger Spannung zu speisen. Beispielsweise wird bei bekannten Lötpistolen eine bügelförmige Heizspitze, die sowohl das Heizelement als auch die Lötspitze bildet, mit einer sehr niedrigen Spannung über einen Transformator aus dem Wechselstromnetz gespeist. Auch andere elektronisch geregelte Lötkolben verwenden als Speisespannungsquelle für das Heizelement einen Übertrager mit niedriger Sekundärspannung, beispielsweise im Bereich von 24 Volt.

Diese geringe, aus Sicherheitsgründen erwünschte Speisespannung für das Heizelement bzw. die Lötspitze erfordert jedoch bei Speisung aus dem Wechselstromnetz und bei höheren Leistungen die Verwendung eines relativ schweren Netzübertragers, dessen Dimensionierung insbesondere auch bei bügelförmigen kombinierten Heizelementen und Lötspitzen kritisch ist. Eine Regelung der Heizleistung derartiger Lötpistolen ist nicht ohne weiteres möglich, da die Übertrager üblicherweise im Sättigungsbetrieb betrieben werden. Bei geregelten Lötkolben anderer Art ergibt sich weiterhin das Problem, daß in vielen Fällen eine galvanische Trennung zwischen Lötwerkzeug und Speisenetz erforderlich ist, was nur durch die Verwendung eines relativ schweren Netzübertragers oder Transformators erzielt werden kann.

Der Erfindung liegt die Aufgabe zugrunde, ein elektrisch beheiztes Lötwerkzeug der eingangs genannten Art zu schaffen, das bei wesentlich verringertem Gewicht eine einwandfreie galvanische Trennung gegenüber dem Speisenetz ermöglicht.

Diese Aufgabe wird durch die im kennzeichnenden Teil des Patentanspruchs 1 angegebene Erfindung gelöst.

Vorteilhafte Ausgestaltungen und Weiterbildungen der Erfindung ergeben sich aus den Unteransprüchen.

Bei dem erfindungsgemäßen Lötwerkzeug wird als Übertrager ein Hochfrequenzübertrager verwendet, der gleichzeitig den Schwingtransformator eines Spannungswandlers bildet. Dieser Spannungswandler kann vorzugsweise mit einer Schwingfrequenz im Bereich von etwa 30 kHz arbeiten, da bei diesem Frequenzbereich einerseits die Schaltverluste noch ausreichend klein sind und andererseits eine geringe Größe des Übertragers erforderlich ist. Das Heizelement wird mit der Sekundärspannung der Übertragers gespeist, so daß eine einwandfreie galvanische Trennung zwischen der Lötspitze und dem Speisenetz erzielbar ist. Die Auswerteschaltung für das Ausgangssignal des Temperaturfühlers wird ebenfalls aus der Sekundärspannung des Übertragers über eine Gleichrichterschaltung gespeist, wobei die Speisespannung dieser Auswerteschaltung entweder über einen ausreichend großen Kondensator oder gegebenenfalls über einen Akkumulator gepuffert sein kann.

Bei Verwendung eines Kondensators als Puffer und Speicher für die Speisespannung der Auswerteschaltung ist der Spannungswandler so auf die Auswerteschaltung abgestimmt, daß bei fehlendem Ausgangssignal der Auswerteschaltung ein Startsignal für den Spannungswandler gegeben wird. Bei Pufferung der Speisespannung in einem Akkumulator, der nur eine geringe Speicherkapazität haben muß, kann auch eine Betriebsweise verwendet werden, bei der ein Ausgangssignal der Auswerteschaltung ein Einschalten des Spannungswandlers bewirkt, während eine fehlende oder unter einem Schwellwert liegende Ausgangsspannung der Auswerteschaltung zu einem Abschalten des Spannungswandlers führt.

Das Ausgangssignal der Auswerteschaltung wird dem Spannungswandler über ein Koppelelement mit galvanischer Trennung, beispielsweise einen Optokoppler oder einen Impulstransformator zugeführt, so daß die galvanische Trennung zwischen Lötspitze und Speisespannungsquelle aufrechterhalten wird.

Das Heizelement kann entweder direkt mit der Hochfrequenz-Ausgangsspannung des Übertragers oder von dieser über eine Gleichrichterschaltung gespeist werden. Bei Verwendung der direkten Speisung des Heizelementes kann dieses Heizelement entweder als Hochfrequenzspule ausgebildet sein, die eine einen ferromagnetischen Kern aufweisende Lötspitze umgibt und diese durch Induktionserwärmung aufheizt, oder es kann eine bügelförmige kombinierte Lötspitzen- und Heizelementenanordnung verwendet werden, bei der die Schenkel des Bügels durch entsprechende Materialwahl und Formgestaltung so ausgebildet sind, daß sie eine verglichen mit der Spitze des Bügels geringe Impedanz für das Ausgangssignal des Übertragers aufweisen.

Aufgrund des geringen Gewichtes des Hochfrequenzübertragers ergibt sich beispielsweise bei Lötpistolen eine wesentliche Gewichtsersparnis. Weiterhin ist es möglich, den Übertrager zusammen mit den übrigen Bauteilen des Spannungswandlers und gegebenenfalls zusammen mit der Auswerteschaltung für das Ausgangssignal des Temperaturfühlers in einem Stekkergehäuse anzuordnen, das über ein Kabel mit dem Lötwerkzeug verbunden ist. Die Auswerteschaltung für das Ausgangssignal des Temperaturfühlers kann jedoch auch im Handgriff des Lötwerkzeuges angeordnet sein.

Bei direkter Speisung des Heizelementes mit einer Hochfrequenzspannung ist es weiterhin möglich, die Lötstelle benachbart zu einem Permanentmagnetfeld anzuordnen, wodurch sich durch das Zusammenwirken der Hochfrequenzwechselspannung mit diesem Permanentmagnetfeld eine Ultraschallschwinnung der Lötspitze ergibt, die das Aufbrechen von Oxydschichten auf der Lötstelle erleichtert.

Die Erfindung wird im folgenden anhand von in der Zeichnung dargestellten Ausführungsbeispielen noch näher erläutert.

In der Zeichnung zeigen :

Figur 1 ein Blockschaltbild einer Ausführungsform des Lötwerkzeuges,

Figur 2 ein Zeitdiagramm zur Erläuterung der Betriebsweise des Lötwerkzeuges nach Fig. 1,

Figur 3 ein ausführlicheres Schaltbild einer Ausführungsform der elektronischen Schaltungen des Lötwerkzeuges,

Figur 4 eine Seitenansicht einer als Lötpistole ausgebildeten Ausführungsform des Lötwerkzeuges in Verbindung mit mehreren Daten von Lötspitzen bzw. Heizelementen,

Figur 5 eine weitere Ausführungsform des Lötwerkzeuges, bei dem der Übertrager und die übrigen Bauteile der Spannungswandlerschaltung in einem Steckergehäuse angeordnet sind,

Figur 6 eine Ausführungsform des Lötwerkzeuges, bei dem die Lötspitze in Ultraschallschwingungen versetzt ist,

Figur 7 eine weitere Ausführungsform eines Lötwerkzeuges mit in Ultraschallschwingungen versetzter Lötspitze,

Figur 8 eine schematische Darstellung einer weiteren Möglichkeit zur Erzielung einer Ultraschallschwingung der Lötspitze gegenüber der Lötstelle.

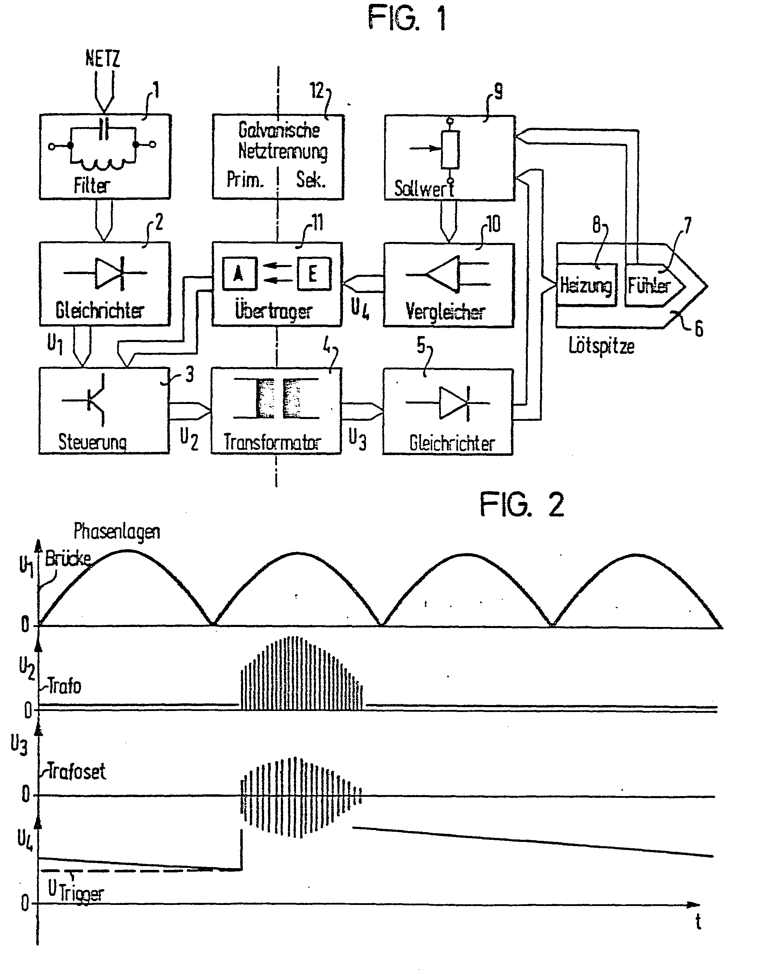

Die in Fig. 1 dargestellte Ausführungsform der elektronischen Schaltungen des Lötwerkzeuges weist eine Gleichrichterschaltung 2 zur Speisung des Spannungswandlers auf, der aus einer Steuerschaltung 3 und dem Übertrager 4 besteht. Die Gleichrichterschaltung 2 wird aus dem Wechselstromnetz über ein Filter 1 gespeist, um die Abstrahlung von Störsignalen so weit wie möglich zu verringern.

Die Sekundärwicklung des Übertragers 4 des Spannungswandlers speist eine weitere Gleichrichterschaltung 5, die zur Speisung der Auswerteschaltungen 9, 10 für das Ausgangssignal eines Temperaturfühlers 7 der insgesamt mit 6 bezeichneten Lötspitze dient.

Die Speisung des Heizelementes 8 der Lötspitze 6 kann entweder ebenfalls über die Gleichrichterschaltung 5 oder direkt aus der Sekundärwicklung des Übertragers 4 erfolgen. Das Ausgangssignal des Temperaturfühlers 7 wird über eine Sollwertschaltung 9 einer Verlgleicherschaltung 10 zugeführt, deren Ausgangssignal $U_4$ über ein Koppelelement 11, beispielsweise einen Optokoppler, an die Steuerschaltung 3 des Spannungswandlers übertragen wird. Auf diese Weise ergibt sich eine vollständige galvanische Netztrennung zwischen dem eigentlichen Lötwerkzeug und dem Wechselspannungsnetz. Mit Hilfe der Sollwertschaltung 9 kann die gewünschte Heizleistung und damit die Temperatur der Lötspitze entweder auf einen vorgegebenen Wert eingestellt oder einstellbar gemacht werden.

In Fig. 2 ist ein Diagramm einzelner Spannungsverläufe in dem Blockschaltbild nach Fig. 1 gezeigt. Das oberste Diagramm zeigt die Ausgangsspannung $U_1$ der Gleichrichterschaltung 2, während das darunter liegende Diagramm das an der Primärwicklung des Übertragers 4 entstehende Signal $U_2$ zeigt. An der Sekundärwicklung des Übertragers 4 ergibt sich das Signal $U_3$, das der Übertragers 4 ergibt sich das Signal $U_3$, das der Gleichrichterschaltung 5 zugeführt wird. Das unterste Diagramm zeigt die Ausgangsspannung $U_4$ des Vergleichers 10, wobei die Triggerschwelle $U_{Trigger}$ für das Starten der Steuerschaltung 3 des Spannungswandlers eingezeichnet ist. Wenn Die Ausgangsspannung $U_4$ oberhalb dieser Triggerspannung liegt, so ist der Spannungswandler abgeschaltet und gesperrt. Wenn die Ausgangsspannung $U_4$ auf die Triggerspannung absinkt, was entweder aufgrund eines noch zu erläuternden Absinkens der Speisespannung der Auswerteschaltung 9, 10 der Fall sein kann, oder aufgrund einer zu niedrigen Temperatur der Lötspitze, so wird der Spannungswandler kurzzeitig eingeschaltet, was umgehend zu einem Anstieg der Speisespannung der Auswerteschaltung 9, 10 auf einen für deren Betrieb ausreichenden Wert führt. Wenn das Absinken der Ausgangsspannung $U_4$ lediglich aufgrund des Absinkens der Speisespannung der Auswerteschaltung auftrat, so wird der Spannungswandler bereits in der dargestellten Weise nach einer Halbperiode der Netzwechselspannung wieder abgeschaltet. Wenn die Temperatur der Lötspitze jedoch unterhalb des Sollwertes liegt, so bleibt der Spannungswandler für eine ausreichende Anzahl von Halbperioden der Netzwechselspannung eingeschaltet, die erforderlich ist, um die Temperatur auf den Sollwert zu bringen. Auf diese Weise ist trotz der vollständigen galvanischen Trennung des Lötwerkzeuges von der Netzwechselspannung eine Steuerung der Heizleistung auf der Primärseite des Übertragers möglich, ohne daß zusätzliche Hilfstransformatoren oder dergleichen für die Speisung der Auswerteschaltung verwendet werden müssen.

Die Speisespannung der Auswerteschaltungen 9, 10 wird über eine einen Stromrückfluß verhindernde Diode und einen Speicherkondensator gepuffert. Anstelle dieses Speicherkondensators könnte auch ein relativ kleiner Akkumulator Verwendung finden, wobei in diesem Fall auch ein umgekehrter Betrieb des Spannungswandlers möglich ist, d. h. ein Einschalten des Spannungswandlers, wenn die Ausgangsspannung der Auswerteschaltung einen vorgegebenen Schwellenwert überschreitet.

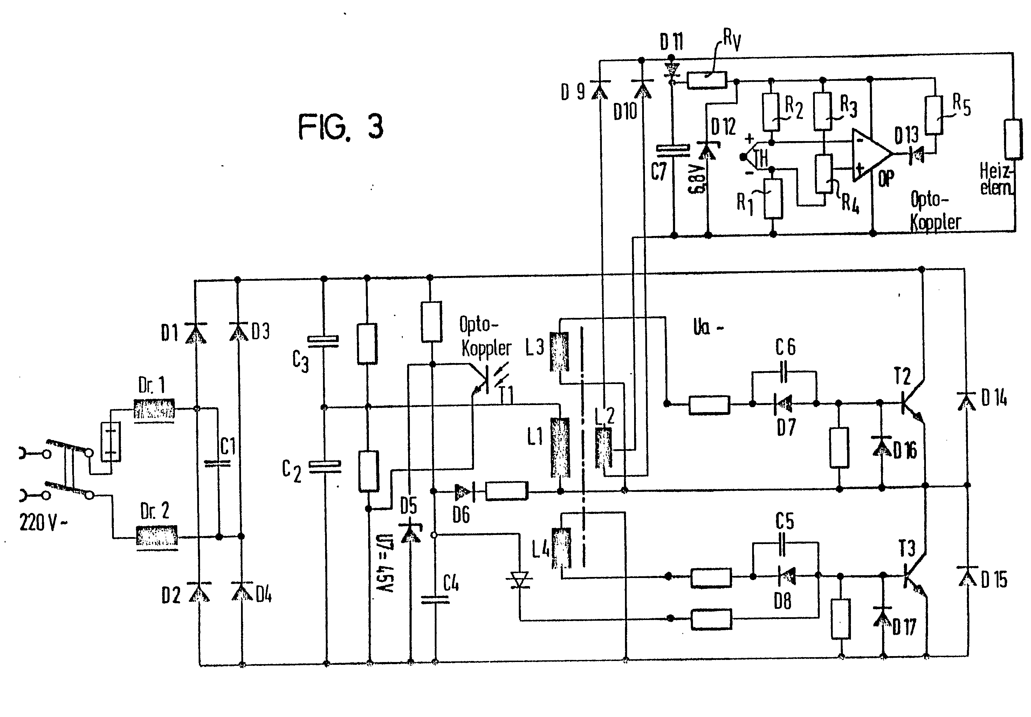

Im folgenden wird anhand der Fig. 3 ein ausführlicheres Schaltbild einer Ausführungsform der elektronischen Schaltungen des Lötwerkzeuges gemäß dem Blockschaltbild nach Fig. 1 erläutert.

Die in Fig. 3 gezeigte Schaltung wird über einen Schalter und ein Filter mit den Drosseln Dr1 und Dr2 sowie dem Kondensator C1 aus der Netzwechselspannung gespeist. Die Netzwechselspannung wird in einer die Gleichrichterschaltung 2 bildenden Gleichrichterschaltung mit den Dioden D1 bis D4 gleichgerichtet. Die Ausgangsklemmen dieser Gleichrichterschaltung sind durch eine Reihenschaltung aus zwei Kondensatoren $C_2$ und $C_3$ sowie eine Reihenschaltung aus zwei Widerständen überbrückt, wobei die gemeinsamen Verbindungspunkte sowohl der beiden Kondensatoren als auch der beiden Widerstände miteinander und mit einem Anschluß der Primärwicklung L1 der Übertragers verbunden sind. Der andere Anschluß der Primärwicklung L1 ist mit dem positiven Pol der Gleichrichterschaltung 2 über einen ersten Widerstand, eine Diode D6 und einen zweiten Widerstand verbunden, wobei der Verbindungspunkt zwischen dem ersten Widerstand und der Diode mit einem Anschluß des Fototransistors eines Optokopplers T1, D13 verbunden ist, dessen Emitterelektrode mit dem negativen Anschluß der Gleichrichterschaltung 2 verbunden ist. Die Spannungswandlerschaltung schließt weiterhin zwei Transistoren T2 und T3 ein, deren Emitter-Kollektor-Strecken in Reihe geschaltet und längs der Ausgangsklemmen der Gleichrichterschaltung 2 angeschaltet sind. Diese Kollektor-Emitter-Strecken sind weiterhin durch Schutzdioden D14, D15 überbrückt, und zwar ebenso wie die jeweiligen Basis-Emitter-Strecken mit Hilfe von Dioden D16 und D17. Die Basiselektroden sind über Parallelkombinationen von Kondensatoren C5, C6 und Dioden D8, D7 mit einem Anschluß jeweiliger Rückkopplungswicklungen L3, L4 des Übertragers verbunden, deren andere Anschlüsse jeweils mit dem Emitteranschluß des zugehörigen Transistors verbunden sind. Der Übertrager weist weiterhin eine mittelangezapfte Sekundärwicklung auf, deren Ausgangssignal in einer Zweiweggleichrichterschaltung mit den Dioden D9 und D10 gleichgerichtet wird und bei der Ausführungsform nach Fig. 3 sowohl zur Speisung der noch zu beschreibenden Auswerteschaltung als auch des Heizelementes dient. Dieses Heizelement kann jedoch auch direkt aus der Hochfrequenzwechselspannung der Sekundärwicklung L2 des Übertragers gespeist werden, wenn dies erwünscht ist. Die Ausgangsspannung der die Gleichrichterschaltung 5 bildenden Dioden D9 und D10 wird über eine Diode D11 einem Speicherkondensator C7 zugeführt, der in der Lage ist, die Speisespannung der Auswerteschaltung für einen gewissen Zeitraum nach dem Abschalten der Spannungswandlerschaltung aufrechtzuerhalten. Die Spannung längs des Kondensators C7 wird mit Hilfe eines Widerstandes $R_v$ und einer Zener-Diode D12 stabilisiert und speist eine Brückenschaltung mit Widerständen R1 bis R4, deren Ausgangssignal einem Operationsverstärker OP zugeführt wird. Das Ausgangssignal des Operationsverstärkers OP steuert die Leuchtdiode D13 des Optokopplers an, die ein Lichtsignal an den Fototransistor T1 liefert. In die Brückenschaltung ist ein Thermoelement TH in der Lötspitze eingeschaltet und der Widerstand R4 der Brückenschaltung ist als Potentiometer ausgebildet, um eine Einstellung der gewünschten Temperatur zu ermöglichen.

Die in Fig. 3 dargestellte Halbbrücken-Gegentaktwandlerschaltung stellt nur ein mögliches Ausführungsbeispiel einer Spannungswandlerschaltung zur Erzeugung der gewünschten Hochfrequenz-Wechselspannung dar und es ist dem Fachmann eine Vielzahl von vergleichbaren Schaltungen für den gleichen Zweck bekannt, so daß auf die Wirkungsweise dieser Spannungswandlerschaltung nicht weiter eingegangen werden soll. Es sei lediglich noch einmal festgehalten, daß der Spannungswandler so lange abgeschaltet ist, wie ein ausreichendes Ausgangssignal von der Leuchtdiode D13 an den Fototransistor T1 geliefert wird. Wenn das Ausgangssignal des Operationsverstärkers unter die Triggerspannung abfällt, was durch einen Abfall der Speisespannung längs des Kondensators C7 oder durch eine zu niedrige Temperatur der Lötspitze hervorgerufen sein kann, die durch das Thermoelement TH gemessen wird, so wird der Spannungswandler eingeschaltet und liefert zumindest für eine einzige Halbperiode der Netzwechselspannung ein Ausgangssignal, das zum Aufladen des Kondensators C7 ausreicht. Eine Entladung des Kondensators C7 über das Heizelement wird durch die Diode D11 verhindert. Wenn nach der genannten einen Halbperiode das Ausgangssignal des Operationsverstärkers OP die Triggerspannung wieder überschreitet, so wird der Spannungswandler unmittelbar nach dieser Halbperiode wieder abgeschaltet, während, wenn das Absinken der Ausgangsspannung des Operationsverstärkers durch eine zu niedrige Temperatur hervorgerufen wurde, der Spannungswandler für eine ausreichende Anzahl von Perioden eingeschaltet bleibt, damit die Soll-Temperatur wieder erreicht wird.

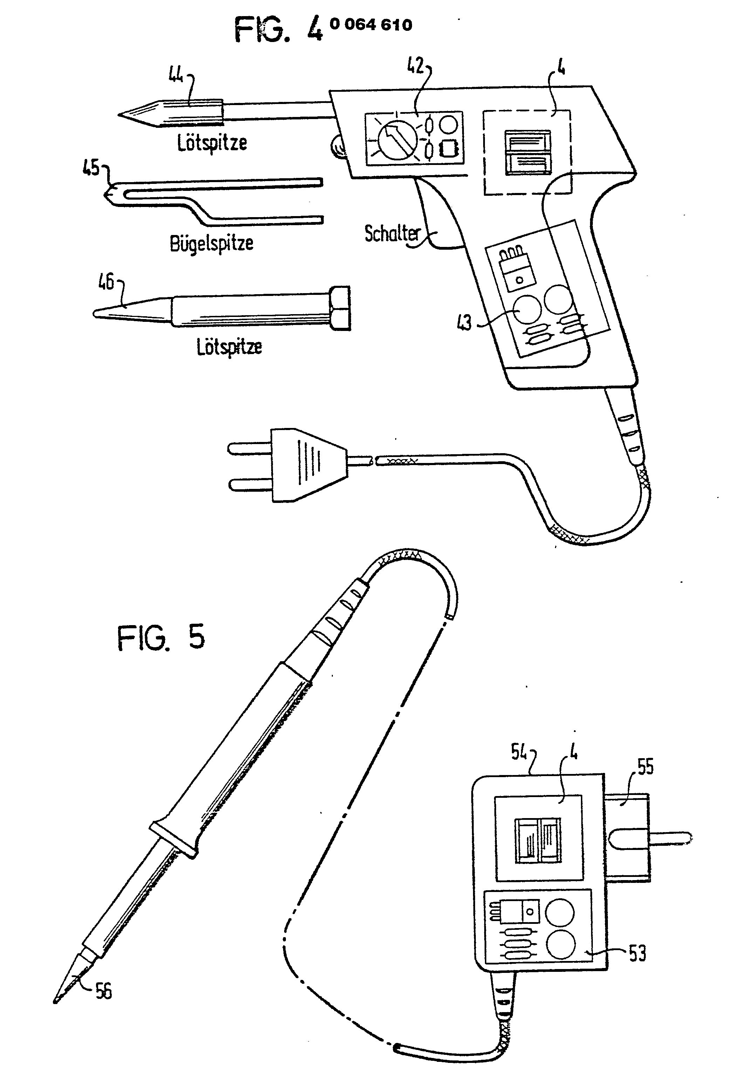

In Fig. 4 ist eine Ausführungsform des Lötwerkzeuges in Form einer Lötpistole dargestellt. Bei dieser Ausführungsform ergibt sich eine erhebliche Gewichtsersparnis gegenüber üblichen Lötpistolen aufgrund der Verwendung des Übertragers 4 bei einer sehr hohen Frequenz, so daß dieser Übertrager eine geringe Größe und ein geringes Gewicht aufweisen kann. Im Handgriff der Lötpistole sind sowohl die Schaltungen 1 bis 3 als auch die Schaltungen 5 und 9 bis 11 angeordnet, so daß die Lötpistole direkt aus dem Netz gespeist werden kann. In Fig. 4 ist die Auswerteschaltung 9, 10 mit 42 bezeichnet, während die Schaltungen 1 bis 3 insgesamt mit der Bezugsziffer 43 bezeichnet sind. Diese Lötpistole kann verschiedene Ausführungsformen von Lötspitzen aufweisen. So ist beispielsweise bei 44 eine innenbeheizte hülsenförmige Lötspitze gezeigt, während bei 45 eine Bügelspitze gezeigt ist. Diese Bügelspitze kann direkt von der Hochfrequenz-Ausgangswechselspannung des Übertragers 4 durchflossen sein, wobei durch geeignete Gestaltung der Form und der Leitfähigkeit der Oberfläche der Bügel eine Konzentration der Wärmeenergie auf die Spitze der Bügelspitze erzielt wird. Hierbei sollten die Bügel eine verglichen mit der eigentlichen Spitze geringe Impedanz für die Hochfrequenz-Wechselspannung aufweisen, um die gesamte Wärmeenergie an der Spitze zu konzentrieren.

Bei 46 ist eine übliche außenbeheizte Ausführungsform einer Lötspitze dargestellt.

Bei allen Lötspitzen ist eine direkte Induktionserwärmung mit Hilfe einer von der Hochfrequenz-Wechselspannung gespeisten Hochfrequenzspule möglich und gegebenenfalls vorteilhaft, da sich hierbei eine sehr schnelle Erwärmung der Lötspitze erzielen läßt.

In Fig. 5 ist eine weitere Ausführungsform eines elektrisch beheizten Lötwerkzeuges unter Verwendung einer elektronischen Steuerschaltung gemäß dem Blockschaltbild nach Fig. 1 gezeigt, bei der der Übertrager 4 sowie die Schaltungen 1 bis 3 in Form einer insgesamt mit 53 bezeichneten Schaltungsplatte in einem Steckergehäuse 54 angeordnet sind, das einen einstückig damit verbundenen Netzstecker 55 aufweist. In Dem Steckergehäuse 54 kann gegebenenfalls auch die Auswerteschaltung 9, 10 nach Fig. 1 angeornet sein, oder diese Auswerteschaltung kann im Handgriff des Lötkolbens angeordnet sein.

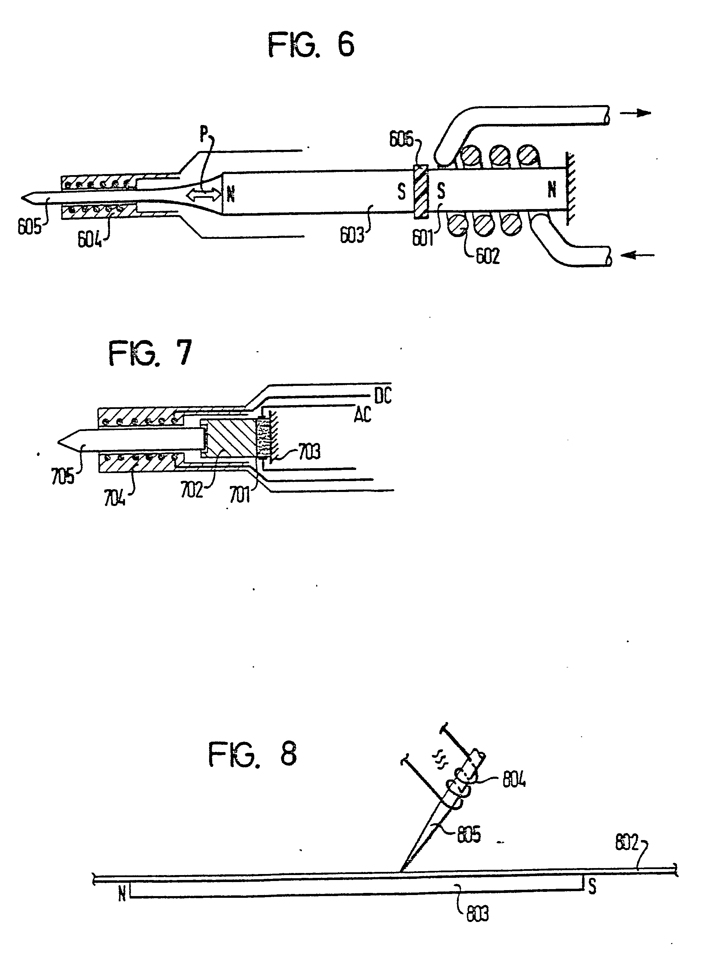

In den Fig. 6 bis 8 sind Ausführungsformen des Lötwerkzeuges schematisch dargestellt, bei denen erkennbar ist, wie die ohnehin vorhandene Hochfrequenz-Wechselspannung in vorteilhafter Weise zur Erzielung einer Ultraschallschwingung der Lötspitze herangezogen werden kann. Eine derartige Ultraschallschwingung erleichtert das Aufbrechen von Oxydschichten an Lötstellen, so daß sich eine Verbesserung der Qualität der Lötstellen ergibt.

Bei der Ausführungsform nach Fig. 6 wird die Hochfrequenz-Wechselspannung einer Hochfrequenzspule 602 zugeführt, die auf einen Kern 601 gewickelt ist. Bei der in Fig. 6 dargestellten Phasenlage weist dieser Kern 601 einen Südpol benachbart zu einem Südpol eines Permanentmagneten 603 auf, der mit dem Kern 601 über ein elastisches Bauteil 606 verbunden ist. Hierdurch ergibt sich eine Abstoßung des Permanentmagneten von dem Kern 601, während bei einer um 180° verschobenen Phasenlage eine Anziehung des Permanentmagneten 603 erfolgt. Am freien Ende dieses Permanentmagneten befindet sich die Lötspitze 605, die von einem Heizelement 604 umgeben ist, das entweder mit der Hochfrequenz-Wechselspannung direkt oder nach deren Gleichrichtung gespeist werden kann. Die Lötspitze wird im Sinne des Pfeils P in eine Axialschwingung mit hoher Frequenz im Ultraschallbereich versetzt.

Fig. 7 zeigt eine weitere Ausführungsform des Lötwerkzeuges, bei dem die Ultraschallschwingung durch einen Piezo-Kristall 701 hervorgerufen wird, der bei 703 starr an dem Griff des Lötwerkzeuges befestigt ist. Dieser Piezo-Kristall 701 ist über ein wärmeisolierendes Adapterelement mit dem hinteren Ende einer Lötspitze 705 verbunden, die ebenfalls von einem Heizelement 704 umgeben ist. Auch bei dieser Ausführungsform wird die Lötspitze in Axialschwingungen im Ultraschallbereich versetzt.

Eine weitere Möglichkeit zur Erzielung einer derartigen Ultraschallschwingung ist in Fig. 8 gezeigt. Hierbei wird das Heizelement über eine Spule 804 mit Hochfrequenz-Wechselstrom gespeist, und die Lötspitze 805 befindet sich im Feld eines Permanent-magneten 803, der unterhalb einer Leiterplatte 802 oder eines anderen Gegenstandes angeordnet ist, auf dem Lötungen durchgeführt werden sollen. Durch die Wechselwirkung des permanentmagnetfeldes des Permanentmagneten 803 und des Wechselstromfeldes der Hochfrequenzspule 804 wird eine Ultraschallschwingung der Lötspitze 805 hervorgerufen.

Bei allen Ausführungsformen ergibt sich ein sehr leichtes kompaktes Lötwerkzeug, dessen Betriebstemperatur sehr genau regelbar ist und bei dem eine vollständige galvanische Trennung von dem Speisenetz gegeben ist. Eine geeignete Frequenz für den Betrieb dieses Lötwerkzeuges liegt beispielsweise im Bereich von 30 kHz, doch können selbstverständlich auch andere Frequenzen in Abhängigkeit von den verwendeten Schalttransistoren T2, T3 sowie dem Material des Übertragers verwendet werden.

**Patentansprüche**

1. Elektrisch beheiztes Lötwerkzeug mit einem über einen Übertrager (4) gespeisten Heizelement (8) zur Heizung einer Lötspitze (6) und mit einem Temperaturfühler (7) mit nachgeschalteter Auswerteschaltung (9, 10) zur Steuerung der dem Heizelement zugeführten Leistung, dadurch gekennzeichnet, daß der Übertrager (4) ein Hochfrequenzübertrager ist, der den Schwingtransformator eines Spannungswandlers (3, 4) bildet, daß die Sekundärspannung des Übertragers (4) das heizelement und über eine Gleichrichterschaltung (5) die Auswerteschaltung (9, 10) für das Ausgangssignal des Temperaturfühlers (7) speist, und daß das Ausgangssignal der Auswerteschaltung (9, 10) über ein Koppelelement (11, 12) mit galvanischer Trennung der Eingangs- und Ausgangskreise den Betriebszustand des Spannungswandlers steuert.

2. Lötwerkzeug nach Anspruch 1, dadurch gekennzeichnet, daß der Spannungswandler (3, 4) ein Gegentaktspannungswandler ist.

3. Lötwerkzeug nach Anspruch 1 oder 2, dadurch gekennzeichnet, daß der Spannungswandler (3, 4) ein Halbbrücken-Gegentaktsperrwandler ist.

4. Lötwerkzeug nach einem der vorhergehenden Ansprüche, dadurch gekennzeichnet, daß das Koppelelement (11) durch einen Optokoppler (D13, T1) gebildet ist.

5. Lötwerkzeug nach einem der Ansprüche 1 bis 3, dadurch gekennzeichnet, daß das Koppelelement (10) durch einen Impulstransformator gebildet ist.

6. Lötwerkzeug nach einem der vorhergehenden Ansprüche, dadurch gekennzeichnet, daß das Heizelment unmittelbar mit der Sekundärwicklung (L2) des Übertragers (4) verbunden ist.

7. Lötwerkzeug nach einem der Ansprüche 1 bis 5, dadurch gekennzeichnet, daß das Heizelement (8) über eine Gleichrichterschaltung (5, D9, D10) mit der Sekundärwicklung (L2) des Übertragers (4) verbunden ist.

8. Lötwerkzeug nach einem der vorhergehenden Ansprüche, dadurch gekennzeichnet, daß der Spannungswandler über eine Gleichrichterschaltung (2) aus dem Wechselstromnetz gespeist ist.

9. Lötwerkzeug nach einem der vorhergehenden Ansprüche, dadurch gekennzeichnet, daß das Heizelement und die Lötspitze in Form einer Bügelspitze (45) miteinander kombiniert sind.

10. Lötwerkzeug nach einem der Ansprüche 1 bis 8, dadurch geknnzeichnet, daß das Heizelement als HF-Spule ausgebildet ist, die eine Lötspitze mit einem ferromagnetischen Kern durch Induktionswärme erhitzt.

11. Lötwerkzeug nach einem der vorhergehenden Ansprüche, dadurch gekennzeichnet, daß bei fehlender oder unter einem Schwellwert liegender Ausgangsspannung der Auswerteschaltung (9, 10) der Spannungswandler eingeschaltet ist.

12. Lötwerkzeug nach einem der vorhergehenden Ansprüche, dadurch gekennzeichnet, daß das von der Lötfläche abgewandte Ende der Lötspitze (605, 705) am freien Ende eines Schwingungssystems (601, 602, 603, 606, 701) befestigt ist, das durch das Hochfrequenzsignal der Sekundärwicklung des Transformators gespeist ist.

13. Lötwerkzeug nach Anspruch 12, dadurch gekennzeichnet, daß das Schwingsystem durch eine einen Kern (601) umschließende Hochfrequenzwicklung (602) gebildet ist, daß ein Ende des Kerns (601) star gegenüber dem Lötwerkzeug befestigt ist, während das andere mit einem Ende eines stabförmigen Permanentmagneten (603) über ein elastisches Element (606) verbunden ist, und daß das freie Ende des stabförmigen Permanentmagneten (603) mit dem von der Lötfläche abgewandten Ende der Lötspitze (605) starr verbunden ist.

14. Lötwerkzeug nach Anspruch 12, dadurch gekennzeichnet, daß das von der Lötfläche abgewandte Ende der Lötspitze (705) über ein wärmeisolierendes Verbindungsglied (702) mit einer Fläche eines Piezo-Kristalls (701) verbunden ist, dessen andere Fläche starr an dem Lötwerkzeug (bei 703) verbunden ist, und daß der Piezo-Kristall mit der Hochfrequenzspannung der Sekundärwicklung des Übertragers (4) beaufschlagt ist.

15. Lötwerkzeug nach einem der Ansprüche 12 bis 14, dadurch gekennzeichnet, daß sich das von dem Schwingungssystem abgewandte Ende der Lötspitze durch ein Heizelement (604, 704) hindurch erstreckt.

16. Lötwerkzeug nach Anspruch 15, dadurch gekennzeichnet, daß das Heizelement mit der Hochfrequenz-Ausgangsspannung der Sekundärwicklung des Übertragers (4) über einen Gleichrichter (5) gespeist ist.

17. Lötwerkzeug nach einem der Ansprüche 1 bis 15, dadurch gekennzeichnet, daß das Heizelement mit der Hochfrequenz-Ausgangsspannung des Übertragers (4) gespeist ist und mit einem benachbart zur Lötstelle angeordneten Dauermagnetfeld zusammenwirkt, um eine mechanische Vibration der Lötspitze gegenüber der Lötstelle hervorzurufen.

18. Lötwerkzeug nach einem der vorhergehenden Ansprüche, dadurch gekennzeichnet, daß das Lötwerkzeug in Form einer Lötpistole ausgebildet ist.

19. Lötwerkzeug nach einem der vorhergehenden Ansprüche, dadurch gekennzeichnet, daß die Spannungswandlerschaltung einschließlich des Übertragers (4) sowie der Gleichrichterschaltung (2) für die Netzwechselspannung in einem Steckergehäuse angeordnet ist.

20. Lötwerkzeug nach Anspruch 19, dadurch gekennzeichnet, daß die Auswerteschaltung (9, 10) ebenfalls in dem Steckergehäuse (54) angeordnet ist.

**Claims**

1. Electrically heated soldering tool comprising a heating element (8) fed via a transformer (4) for heating a soldering tip (6) and a temperature sensor (7) with following evaluation circuit (9, 10) for supplying the power fed to the heating element, characterized in that the transformer (4) is a high-frequency transformer which forms the oscillation transformer of a voltage transformer (3, 4), that the secondary voltage of the transformer (4) feeds the heating element and via a rectifier circuit (5) the evaluating circuit (9, 10) for the output signal of the temperature sensor (7), and that the output signal of the evaluating circuit (9, 10) via a coupling element (11, 12) with dc disconnection of the input and output circuits controls the operating state of the voltage transformer.

2. Soldering tool according to claim 1, characterized in that the voltage transformer (3, 4) is a push-pull voltage transformer.

3. Soldering tool according to claim 1 or 2, characterized in that the voltage transformer (3, 4) is a half-bridge push-pull reverse transformer.

4. Soldering tool according to any one of the preceding claims, characterized in that the coupling element (11) is formed by an optical coupler (D13, T1).

5. Soldering tool according to any one of claims 1 to 3, characterized in that the coupling element (10) is formed by a pulse transformer.

6. Soldering tool according to any one of the preceding claims, characterized in that the heating element is connected directly to the secondary winding (L2) of the transformer (4).

7. Soldering tool according to any one of claims 1 to 5, characterized in that the heating element (8) is connected via a rectifier circuit (5, D9, D10) to the secondary winding (L2) of the transformer (4).

8. Soldering tool according to any one of the preceding claims, characterized in that the voltage transformer is fed via a rectifier circuit (2) from the ac mains.

9. Soldering tool according to any one of the preceding claims, characterized in that the heating element and the soldering tip are combined with each other in the form of a stirrup tip (45).

10. Soldering tool according to any one of claims 1 to 8, characterized in that the heating element is constructed as HF coil which heats a soldering tip with a ferromagnetic core by induction heat.

11. Soldering tool according to any one of the preceding claims, characterized in that when no output voltage of the evaluating circuit (9, 10) is present or said voltage lies beneath a threshold the voltage transformer is switched on.

12. Soldering tool according to any one of the preceding claims, characterized in that the end of the soldering tip (605, 705) remote from the soldering face is secured to the free end of an oscillation system (601, 602, 603, 606, 701) which is fed by the high-frequency signal of the secondary winding of the transformer.

13. Soldering tool according to claim 12, characterized in that the oscillation system is formed by a high-frequency winding (602) surrounding a core (601), that one end of the core (601) is secured rigidly with respect to the soldering tool whilst the other end is connected to an end of a rod-shaped permanent magnet (603) via a resilient element (606), and that the free end of the rod-shaped permanent magnet (603) is rigidly connected to the end of the soldering tip (605) remote from the soldering face.

14. Soldering tool according to claim 12, characterized in that the end of the soldering tip (705) remote from the soldering face is connected via a thermally insulating connected member (702) to a face of a piezo crystal (701) whose other face is rigidly connected to the soldering tool (at 703) and that the piezo crystal is subjected to the high-frequency voltage of the secondary winding of the transformer (4).

15. Soldering tool according to any one of claims 12 to 14, characterized in that the end of the soldering tip remote from the oscillation system extends through a heating element (604, 704).

16. Soldering tool according to claim 15, characterized in that the heating element is fed with the high-frequency output voltage of the secondary winding of the transformer (4) via a rectifier (5).

17. Soldering tool according to any one of claims 1 to 15, characterized in that the heating element is fed with the high-frequency output voltage of the transformer (4) and cooperates with a permanent magnetic field disposed adjacent the soldering point to produce a mechanical vibration of the soldering tip with respect to the soldering point.

18. Soldering tool according to any one of the preceding claims, characterized in that the soldering tool is constructed in the form of a soldering gun.

19. Soldering tool according to any one of the preceding claims, characterized in that the voltage transformer circuit including the transformer (4) and the rectifier circuit (2) for the mains ac voltage is accomodated in a plug connector housing.

20. Soldering tool according to claim 19, characterized in that the evaluating circuit (9, 10) is also disposed in the plug connector housing (54).

**Revendications**

1. Outil de soudage chauffé électriquement qui comporte un élément chauffant (8) alimenté par l'intermédiaire d'un transformateur (4) pour le chauffage d'une pointe de soudage (6), et une sonde de température (7) en aval de laquelle il est prévu un montage d'évaluation (9, 10) pour la commande de la puissance amenée à l'élément chauffant, caractérisé en ce que le transformateur (4) est un transformateur à haute fréquence qui constitue le transformateur d'oscillation d'un transformateur de tension (3, 4), en ce que la tension secondaire du tansformateur (4) alimente l'élément chauffant et, par l'intermédiaire d'un montage en redresseur (5), le montage d'évaluation (9, 10) pour le signal de sortie de la sonde de température (7), et en ce que le signal de sortie du montage d'évaluation (9, 10), par l'intermédiaire d'un élément de couplage (11, 12) avec séparation galvanique des circuits d'entrée et de sortie, règle l'état de fonctionnement du transformateur de tension.

2. Outil de soudage suivant la revendication 1, caractérisé en ce que le transformateur de tension (3, 4) est un transformateur de tension en push-pull.

3. Outil de soudage suivant l'une ou l'autre des revendications 1 et 2, caractérisé en ce que le transfomateur de tension (3, 4) est un transformateur de blocage en push-pull en demi-pont.

4. Outil de soudage suivant l'une quelconque des revendications précédentes, caractérisé en ce que l'élément de couplage (11) est constitué par un optocoupleur (D13, T1).

5. Outil de soudage suivant l'une quelconque des revendications 1 à 3, caractérisé en ce que l'élément de couplage (11) est constitué par un transformateur d'impulsions.

6. Outil de soudage suivant l'une quelconque des revendications précédentes, caractérisé en ce que l'élément chauffant est relié directement à l'enroulement secondaire (L2) du transformateur (4).

7. Outil de soudage suivant l'une quelconque des revendications 1 à 5, caractérisé en ce que l'élément chauffant (8) est relié par l'intermédiaire d'un montage en redresseur (5, D9, D10) à l'enroulement secondaire (L2) du transformateur (4).

8. Outil de soudage suivant l'une quelconque des revendications précédentes, caractérisé en ce que le transformateur de tension est alimenté par l'intermédiaire d'un montage en redresseur (2) à partir du réseau de courant alternatif.

9. Outil de soudage suivant l'une quelconque des revendications précédentes, caractérisé en ce que l'élément chauffant et la pointe de soudage sont combinés sous la forme d'une pointe de soudage en épingle à cheveux (45).

10. Outil de soudage suivant l'une quelconque des revendications 1 à 8, caractérisé en ce que l'élément chauffant est prévu sous la forme d'une bobine HF qui chauffe une pointe de soudage à noyau ferromagnétique par la chaleur d'induction.

11. Outil de soudage suivant l'une quelconque des revendications précédentes caractérisé en ce qu'en cas d'absence de tension de sortie ou d'une valeur de la tension de sortie inférieure à une valeur de seuil du montage d'évaluation (9, 10), le transformateur de tension est en circuit.

12. Outil de soudage suivant l'une quelconque des revendications précédentes caractérisé en ce que l'extrémité de la pointe de soudage (605, 705) qui est opposée à la face de soudage est fixée à l'extrémité libre d'un système à oscillations (601, 602, 603, 606, 701) qui est alimenté par le signal haute fréquence de l'enroulement secondaire du transformateur.

13. Outil de soudage suivant la revendication 12, caractérisé en ce que le système à oscillations est constitué par un enroulement à haute fréquence (602) entourant un noyau (601), en ce qu'une extrémité du noyau (601) est fixée rigidement par rapport à l'outil de soudage, tandis que l'autre extrémité est reliée à une extrémité d'un aimant permanent sous forme de barre (603) par l'intermédiaire d'un élément élastique (606) et en ce que l'extrémité libre de l'aimant permanent sous forme de barre (603) est reliée rigidement à l'extrémité de la pointe de soudage (605) qui est opposée à la face de soudage.

14. Outil de soudage suivant la revendication 12, caractérisé en ce que l'extrémité de la pointe de soudage (705) qui est opposée à la face de soudage est reliée par l'intermédiaire d'un élément de liaison isolant de la chaleur (702) à une face d'un piézo-cristal (701) dont l'autre face est reliée rigidement à l'outil de soudage (en 703), et en ce que le piézo-cristal est alimenté par la tension à haute fréquence de l'enroulement secondaire du transformateur (4).

15. Outil de soudage suivant l'une quelconque des revendications 12 à 14, caractérisé en ce que l'extrémité de la pointe de soudage qui est opposée au système à oscillations passe par un élément chauffant (604, 704).

16. Outil de soudage suivant la revendication 15, caractérisé en ce que l'élément chauffant est alimenté par la tension de sortie à haute fréquence de l'enroulement secondaire du transformateur (4) par l'intermédiaire d'un redresseur (5).

17. Outil de soudage suivant l'une quelconque des revendications 1 à 15, caractérisé en ce que l'élément chauffant est alimenté par la tension de sortie à haute fréquence du transformateur (4) et coopère avec un champ d'aimant permanent voisin du point de soudage, pour provoquer une vibration mécanique de la pointe de soudage par rapport au point de soudage.

18. Outil de soudage suivant l'une quelconque des revendications précédentes, caractérisé en ce qu'il se présente sous la forme d'un pistolet de soudage.

19. Outil de soudage suivant l'une quelconque des revendications précédentes, caractérisé en ce que le montage transformateur de tension, y compris le transformateur (4) ainsi que le montage en redresseur (2) pour la tension alternative du réseau, est monté dans un boîtier à prise de courant par fiches.

20. Outil de soudage suivant la revendication 19, caractérisé en ce que le montage d'évaluation (9, 10) est également monté dans le boîtier à prise de courant par fiches (54).

# FIG. 1

NETZ

**1** Filter

**2** Gleichrichter

**3** Steuerung

**12** Galvanische Netztrennung — Prim. | Sek.

**11** Übertrager — A ← E

**4** Transformator

**9** Sollwert

**10** Vergleicher

**5** Gleichrichter

**8** Heizung | **7** Fühler

**6** Lötspitze

$U_1$  $U_2$  $U_3$  $U_4$

# FIG. 2

Phasenlagen

$U_1$ Brücke

$U_2$ Trafo

$U_3$ Trafoset

$U_4$

$U_{Trigger}$

t

FIG. 3

0 064 610

# FIG. 4

0 064 610

Lötspitze

Bügelspitze

Lötspitze

Schalter

# FIG. 5

# FIG. 6

# FIG. 7

# FIG. 8